# EUROPEAN PATENT APPLICATION

(11) **EP 1 132 798 A1**
(43) Date of publication of application: **12.09.2001**
(21) Application number: 00310815.6
(22) Date of filing: 05.12.2000
(51) Int. Cl.: G06F 1/00

(54) **Infomation processing apparatus and storage medium**

(30) Priority: 18.01.2000 JP 2000009373; 06.07.2000 JP 2000205279
(71) Applicant: FUJITSU LIMITED, Kawasaki-shi, Kanagawa 211-8588 (JP)
(72) Inventor: Miyamae, Takeshi, c/o Fujitsu Limited, Kawasaki-shi, Kanagawa 211-8588 (JP); Sakamaki, Kenji, c/o Fujitsu Limited, Kawasaki-shi, Kanagawa 211-8588 (JP); Oura, Shigeaki, c/o Fujitsu Limited, Kawasaki-shi, Kanagawa 211-8588 (JP); Ono, Satoko, c/o Fujitsu Limited, Kawasaki-shi, Kanagawa 211-8588 (JP); Kihara, Michisaburou, c/o Fujitsu Limited, Kawasaki-shi, Kanagawa 211-8588 (JP); Saitoh, Masahiro, c/o Fujitsu Limited, Kawasaki-shi, Kanagawa 211-8588 (JP); Mizutani, Kayo, c/o Fujitsu Limited, Kawasaki-shi, Kanagawa 211-8588 (JP); Nagano, Hisaaki, c/o Fujitsu Limited, Kawasaki-shi, Kanagawa 211-8588 (JP); Takeda, Tetsuya, Kawasaki-shi, Kanagawa 214-0013 (JP)
(74) Representative: Mohun, Stephen John

(57) **Abstract**

An information processing apparatus includes a setting section for setting a sum total of a usable time of at least one specific function under a predetermined condition, and a restricting section for restricting use of the specific function if a used time of the specific function exceeds the sum total of usable time of the specific function.

## Description

This application claims the benefit of Japanese Patent Applications No.2000-009373 filed January 18, 2000 and No.2000-205279 filed July 6, 2000, in the Japanese Patent Office, the disclosures of which are hereby incorporated by reference.

The present invention generally relates to information processing apparatuses and storage media, and more particularly to an information processing apparatus which can make a setting related to a working time, and to a computer-readable storage medium which stores a program for causing a computer to make such a setting.

In this specification, an information processing apparatus refers to various kinds of computer systems including desk-top and portable (lap-top) computer systems, terminal apparatuses such as electronic notebooks, mobile terminals and portable telephone sets, and various kinds of electronic apparatuses having an interactive function such as intelligent television sets. In addition, the working time of the information processing apparatus refers to the time the information processing apparatus is used by the user.

In the prior art, various methods have been proposed to restrict the use of the personal computer.

A first proposed method utilizes a setting program included in a basic input output system (BIOS) of the personal computer. More particularly, the setting program of the BIOS is started immediately after the power of the personal computer is turned ON, so as to make the setting for restricting the use of the personal computer. For example, when a password is set, it is possible to make the personal computer usable only by a user who knows the password. In addition, with respect to individual devices of the personal computer, the use thereof can be restricted by stopping the power supply or changing a register value depending on the setting made by the user.

On the other hand, a second proposed method uses a setting program of an operating system (OS) of the personal computer. More particularly, a password is set for starting the OS of the personal computer, and the use of the individual devices of the personal computer is restricted depending on the setting made.

Opportunities of using the personal computer continue to increase, since the personal computer may be used to play games and to make communications on the internet using a communication function of the personal computer. Generally, the personal computer used at homes makes a data communication using a modem or a terminal adapter (TA) via a telephone line. For this reason, there are demands to restrict the excessive use of the personal computer to a certain extent, so as to prevent small children from becoming too keen on playing games or to prevent an extremely high communication cost from being generated due to frequent communications made over the internet for an extremely long time.

When restricting the use of the personal computer and the devices thereof by the setting program of the BIOS or the OS as in the case of the first or second proposed method, it is a precondition that the user himself has the will to restrict the use of the personal computer. Hence, in a case where the user himself does not have the will to restrict the use of the personal computer, as in the case of small children, for example, the parents must make the setting for them. However, the parents cannot judge whether or not the use of the personal computer and the devices thereof should be restricted, unless the parents constantly check how the children use the personal computer and the devices thereof. In addition, if the parents are not present when the children use the personal computer and the devices thereof, it is impossible to appropriately restrict the use of the personal computer and the devices thereof. Furthermore, if the use of the personal computer and the devices thereof must be restricted everyday, for example, it is extremely troublesome for the parents to make the necessary setting to restrict the use of the personal computer and the devices thereof. Accordingly, there were demands to eliminate such inconveniences of the proposed methods of restricting the use of the personal computer and the devices thereof.

On the other hand, the user himself may restrict the use of the personal computer and the devices thereof on his own will, in order to prevent the cost of use from becoming extremely large. But in this case, if the user forgets to check the time, the possibility of the user continuing to use the personal computer and the devices thereof exceeding a limit is high. Therefore, there was a problem in that the first and second proposed methods cannot positively restrict the use of the personal computer and the devices thereof.

In addition, in the prior art it was impossible to restrict the use of the personal computer and the devices thereof with respect to each of the users when the users share the same personal computer and the devices thereof. In other words, it was impossible to finely restrict the use of the personal computer and the devices thereof depending on the situation.

Accordingly, embodiments of the present invention aim to provide a novel and useful information processing apparatus and storage medium, in which the problems described above are eliminated.

Another and more specific aim is to provide an information processing apparatus and a storage medium, which can automatically restrict the use of a specific function when a time for which the specific function is used exceeds an arbitrarily set sum total, and restrict the use of a specific function with respect to each of a plurality of users, so that the information processing apparatus may be used with moderation by a relatively simple structure.

Still another aim is to provide an information processing apparatus comprising setting means for setting a sum total of a usable time of at least one specific function under a predetermined condition, and restricting means for restricting use of the specific function if a used time of the specific function exceeds the sum total of usable time of the specific function. According to the information processing apparatus of the present invention, it is possible to automatically restrict the use of the specific function when a time for which the specific function is used exceeds an arbitrarily set sum total, so that the information processing apparatus may be used with moderation by a relatively simple structure.

A further aim is to provide an information processing apparatus comprising setting means for setting a usable time band of at least one specific function under a predetermined condition, with respect to each of a plurality of users, and restricting means for restricting use of the specific function by a predetermined user during a time band other than a usable time band which is set with respect to the predetermined user. According to the information processing apparatus of the present invention, it is possible to automatically restrict the use of the specific function with respect to each of a plurality of users, so that the information processing apparatus may be used with moderation by a relatively simple structure.

Another aim is to provide a computer-readable storage medium which stores a program for causing a computer to restrict a usable time of a function of the computer, the program comprising a setting procedure causing the computer to set a sum total of a usable time of at least one specific function under a predetermined condition, and a restricting procedure causing the computer to restrict use of the specific function if a used time of the specific function exceeds the sum total of usable time of the specific function. According to the computer-readable storage medium of the present invention, it is possible to automatically restrict the use of the specific function when a time for which the specific function is used exceeds an arbitrarily set sum total, so that the information processing apparatus may be used with moderation by a relatively simple structure.

Still another aim is to provide a computer-readable storage medium which stores a program for causing a computer to restrict a usable time of a function of the computer, the program comprising a setting procedure causing the computer to set a usable time band of at least one specific function under a predetermined condition, with respect to each of a plurality of users, and a restricting procedure causing the computer to restrict use of the specific function by a predetermined user during a time band other than a usable time band which is set with respect to the predetermined user. According to the computer-readable storage medium of the present invention, it is possible to automatically restrict the use of the specific function with respect to each of a plurality of users, so that the information processing apparatus may be used with moderation by a relatively simple structure.

The invention is defined in the attached independent claims, to which reference should now be made. Further, preferred features may be found in the sub-claims appended thereto.

Preferred embodiments of the present invention will now be described, by way of example only, with reference to the accompanying drawings, in which:
FIG. 1 is a perspective view showing a first embodiment of an information processing apparatus according to the present invention;
FIG. 2 is a system block diagram for explaining the structure of an important part within a main body of a computer system;
FIG. 3 is a system block diagram showing portions of a hardware function and a software function of the computer system of the first embodiment;
FIG. 4 is a diagram showing an initial display made when a power of the computer system is turned ON;
FIG. 5 is a diagram showing a display which is made when a setting program of a BIOS is started;
FIG. 6 is a diagram showing a display which is made by selecting "setting of other internal devices";
FIG. 7 is a diagram showing a display which is made by selecting "setting of modem using time";
FIG. 8 is a diagram showing a pop-up display which is made by selecting "upper limit of accumulated used time per month";
FIG. 9 is a diagram showing a display which is made by operating an escape key after setting a setting time;
FIG. 10 is a time chart for explaining a use restricting process when starting use of a modem in the first embodiment;
FIG. 11 is a diagram showing a display of a warning message;
FIG. 12 is a time chart for explaining a use restricting process when ending the use of the modem in the first embodiment;
FIG. 13 is a time chart for explaining a use restricting process depending on a time band of the modem in the first embodiment;
FIG. 14 is a diagram showing a display of a warning message;
FIG. 15 is a system block diagram showing portions of a hardware function and a software function of a computer system in a second embodiment of the information processing apparatus according to the present invention;
FIG. 16 is a time chart for explaining a use restricting process when starting use of an application in the second embodiment;
FIG. 17 is a time chart for explaining a use restricting process when ending use of the application in the second embodiment;
FIG. 18 is a system block diagram showing a server-client system applied with a third embodiment of the information processing apparatus according to the present invention;
FIG. 19 is a time chart for explaining the operation of the third embodiment;
FIG. 20 is a flow chart for explaining an access control process of a fourth embodiment of the information processing apparatus according to the present invention;
FIG. 21 is a diagram showing an embodiment of a user information table;
FIG. 22 is a flow chart for explaining a user information table setting process;
FIG. 23 is a diagram showing a display which is made by selecting "setting of other internal devices";
FIG. 24 is a flow chart for explaining an access control process of a fifth embodiment of the information processing apparatus according to the present invention;
FIG. 25 is a flow chart for explaining a use restriction setting process for each device;
FIG. 26 is a diagram showing a display which is made by selecting "setting of other internal devices";
FIG. 27 is a flow chart for explaining a user authentication process; and
FIG. 28 is a diagram showing a display which is made when making a user authentication.

A description will be given of various embodiments of an information processing apparatus according to the present invention and a computer-readable storage medium according to the present invention, by referring to the drawings.

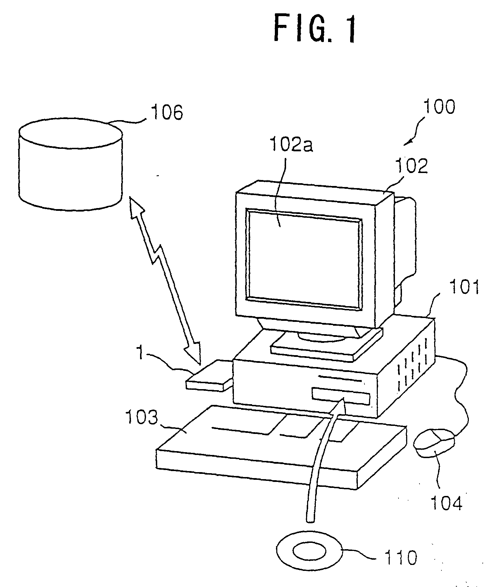

FIG. 1 is a perspective view showing a first embodiment of the information processing apparatus according to the present invention. In this embodiment of the information processing apparatus, the present invention is applied to a desk-top computer system. However, the present invention is of course similarly applicable to other information processing apparatuses such as portable computer systems, terminal apparatuses such as electronic notebooks, mobile terminals and portable telephone sets, and various kinds of electronic apparatuses having an interactive function such as intelligent television sets.

A computer system 100 shown in FIG. 1 generally includes a main body 101 which is provided with a CPU, a disk drive and the like, a display 102 which is provided with a display screen 102a for displaying an image in response to an instruction from the main body 101, a keyboard 103 for inputting various information to the computer system 100, a mouse 104 for specifying an arbitrary position on the display screen 102a of the display 102, and a modem 1 for making access to an external database or the like and downloading a program or the like stored in another computer system.

A use restriction setting program (software) for making the computer system 100 have a use restriction setting function is stored in a portable recording medium such as a disk 110 or is downloaded from a recording medium 106 of another computer system using a communication unit such as the modem 1. This use restriction setting program is input to the computer system 100 and compiled therein. The computer-readable storage medium according to the present invention is made of a recording medium such as the disk 100 which stores this use restriction setting program. The recording medium forming the storage medium according to the present invention is not limited to portable recording media such as the disk 110, IC card memory, floppy disk, magneto-optical disk and CD-ROM, but also includes various kinds of recording media which are accessible by a computer system which is coupled via the communication unit or communication means such as the modem 1 and LAN.

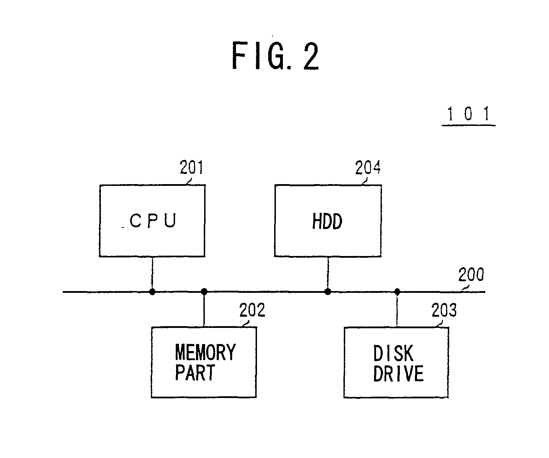

FIG. 2 is a system block diagram for explaining the structure of an important part within the main body 101 of the computer system 100. In FIG. 2, the main body 101 generally includes a CPU 201, a memory part 202 made of RAM, ROM or the like, a disk drive 203 for the disk 110, and a hard disk drive (HDD) 204 which are connected via a bus 200. The display 102, the keyboard 103, the mouse 104 and the like may be connected to the CPU 201 via the bus 200 or, connected directly to the CPU 201, although illustrations thereof will be omitted in FIG. 2.

Of course, the structure of the computer system 100 is not limited to that shown in FIGS. 1 and 2, and various other known structures may be used instead.

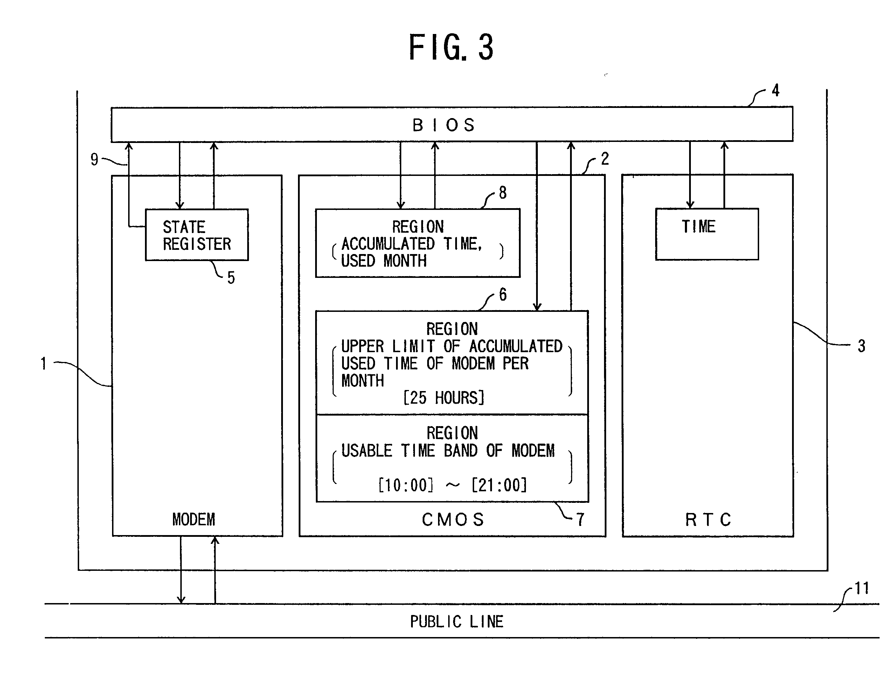

FIG. 3 is a system block diagram showing portions of a hardware function and a software function of the computer system 100 of the first embodiment. In FIG. 3, those parts which are the same as those corresponding parts in FIGS. 1 and 2 are designated by the same reference numerals, and a description thereof will be omitted.

In FIG. 3, the modem 1 is connected to a public line 11. A nonvolatile memory (CMOS) 2 is provided within the memory part 202 shown in FIG. 2, for example. A real time clock (RTC) 3 and a BIOS 4 are respectively realized by the CPU 201.

A register 5 for indicating used and stopped states of the modem 1 is provided within the modem 1. Hence, the BIOS 4 can know the state of the modem 1 by reading a value of the register 5. When the state indicated by the value of the register 5 changes, the modem 1 generates a hardware interrupt 9. The CMOS 2 includes regions 6 and 7 which may be set by the user by a setting program of the BIOS 4. For example, the region 6 stores an upper limit of accumulated used time per month of the modem 1, and the region 7 stores a usable time band of the modem 1. Furthermore, the CMOS 2 includes a region 8 for storing an accumulated used time of the modem 1 by the user and a used month in which the time accumulation is made. The RTC 3 holds a present time, and the BIOS 4 can read the present time held by the RTC 3.

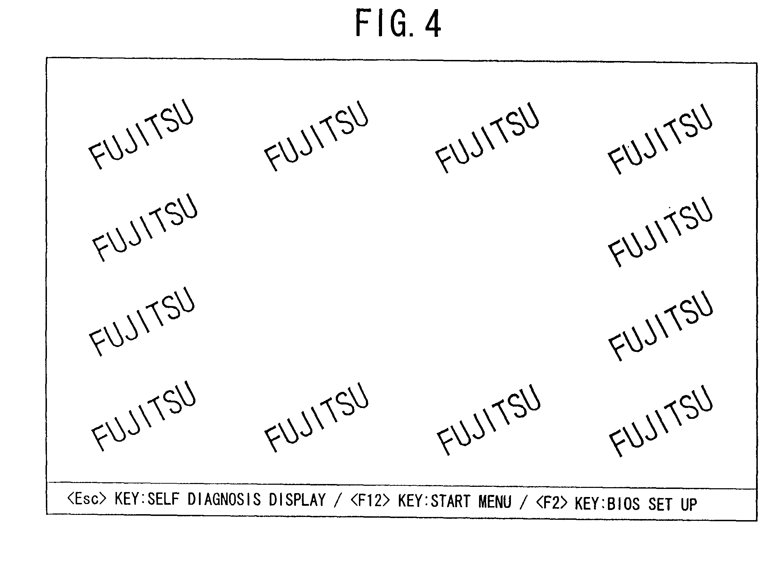

FIGS. 4 through 9 are diagrams for explaining the process of setting a usable accumulation time of the modem 1, writing the upper limit of accumulated used time per month of the modem 1 into the region 6 of the CMOS 2 or, rewriting the upper limit of accumulated used time per month of the modem 1, by the setting program of the BIOS 4.

FIG. 4 is a diagram showing an initial display made on the display 102 when a power of the computer system 100 is turned ON. In this state, the user operates a function key F2 of the keyboard 103, for example, and starts the setting program of the BIOS 4.

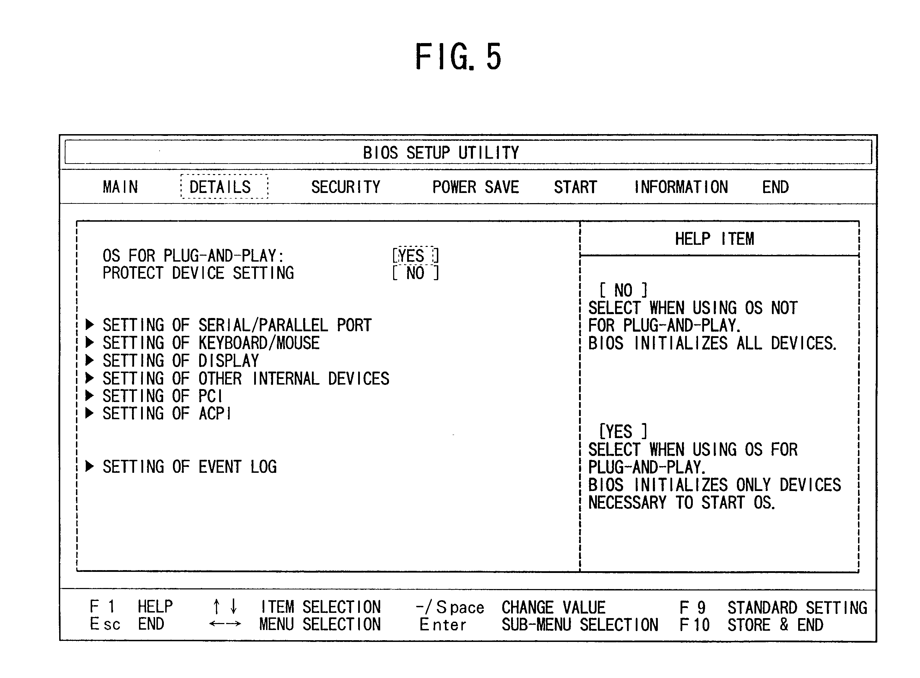

FIG. 5 is a diagram showing a display which is made on the display 102 when the setting program of the BIOS 4 is started. In this state, the user selects "setting of other internal devices" by operating the mouse 104, for example, and operates an enter key of the keyboard 103.

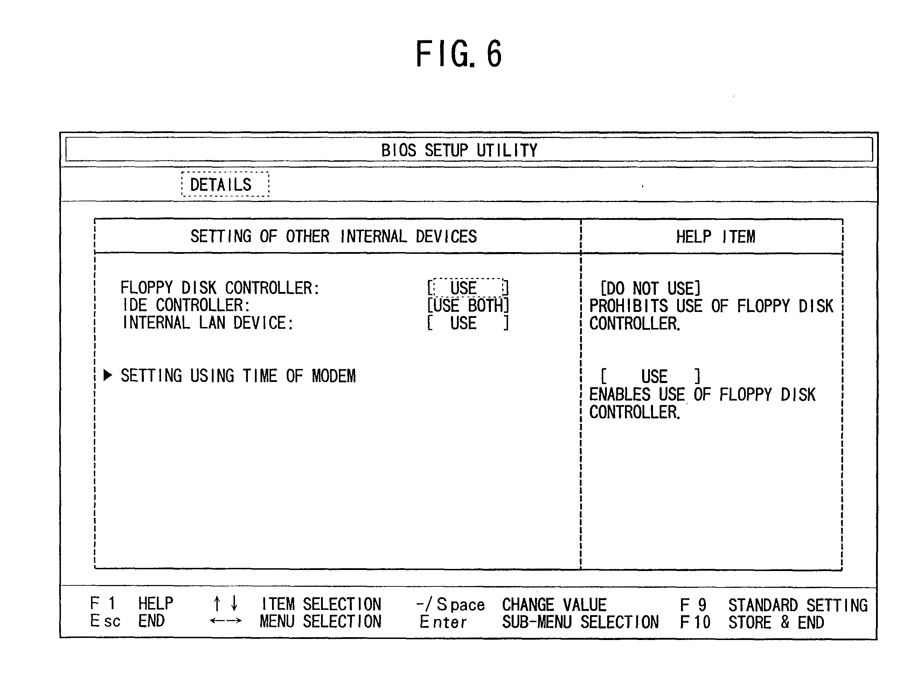

FIG. 6 is a diagram showing a display which is made on the display 102 by selecting "setting of other internal devices". In this state, the user selects "setting of modem using time" by operating the mouse 104, for example, and operates the enter key of the keyboard 103.

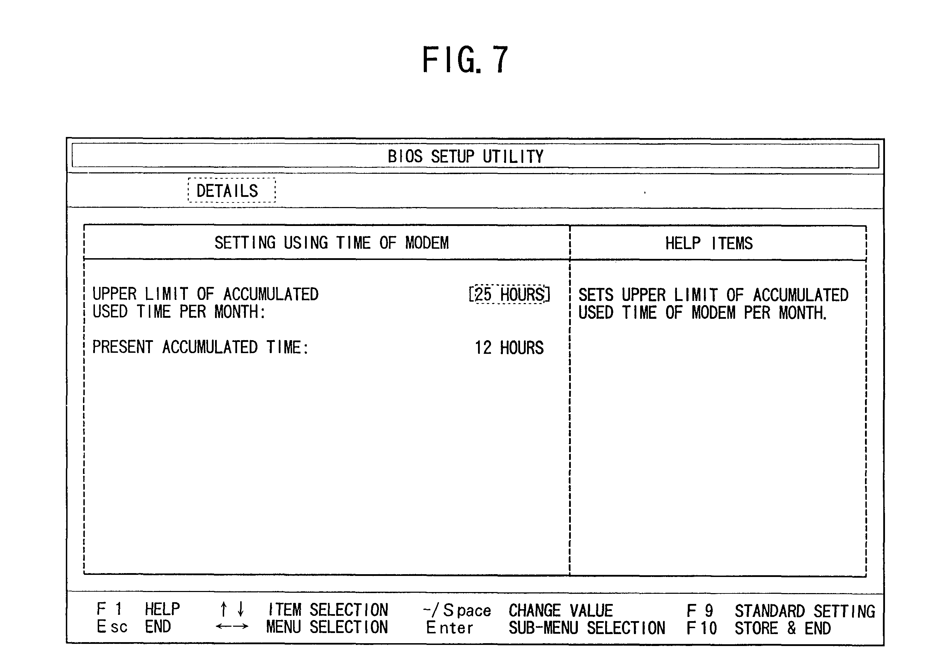

FIG. 7 is a diagram showing a display which is made on the display 102 by selecting "setting of modem using time". In this state, the user selects "upper limit of accumulated used time per month" by operating the mouse 104, for example, and operates the enter key of the keyboard 103.

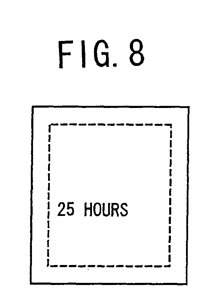

FIG. 8 is a diagram showing a pop-up display which is made on the display 102 by selecting "upper limit of accumulated used time per month". In this state, the user aligns a cursor to a desired setting time by operating the mouse 104, for example, and operates the enter key of the keyboard 103. FIG. 8 shows a case where the setting time is set to 25 hours.

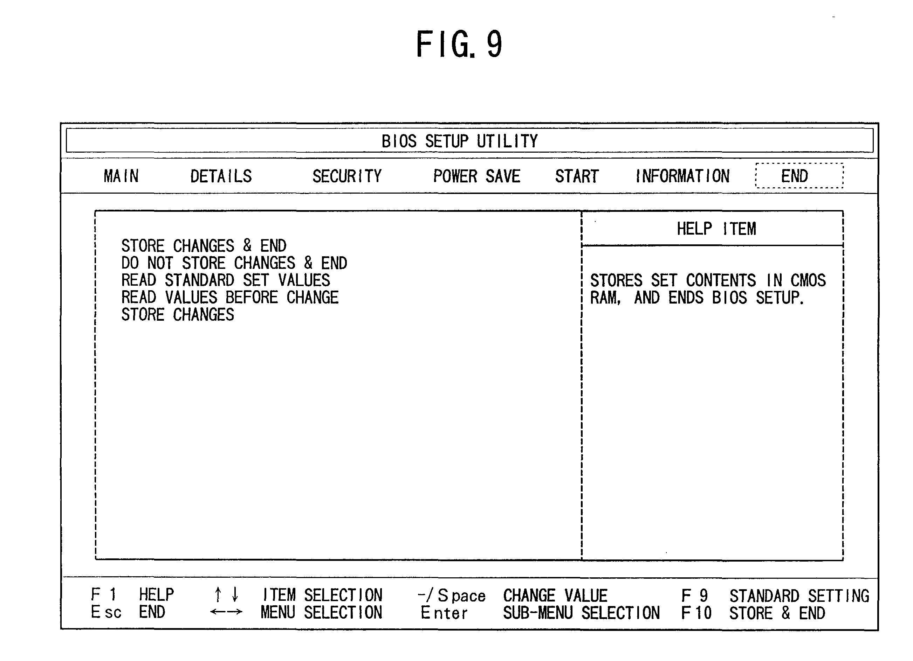

FIG. 9 is a diagram showing a display which is made on the display 102 by operating an escape key of the keyboard 103 three times, for example, after setting the setting time to 25 hours. In this state, the user selects "store changes and end" by operating the mouse 104, for example, and operates the enter key of the keyboard 103. By this operation, the setting program of the BIOS 4 ends, and the OS is started.

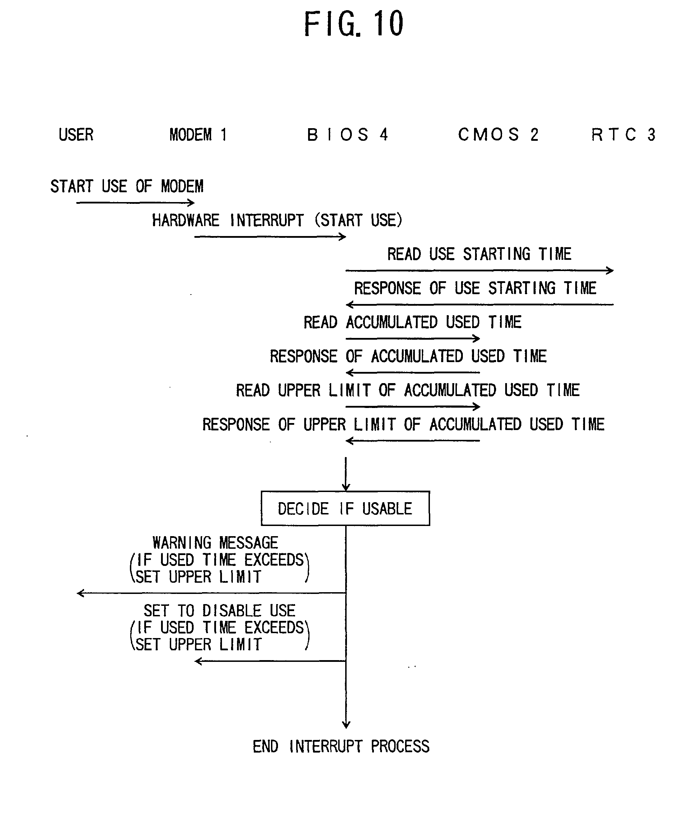

FIG. 10 is a time chart for explaining a use restricting process of the CPU 201 when starting use of the modem 1 in the first embodiment. A first embodiment of the storage medium according to the present invention is formed by a recording medium such as the disk 110, which stores a program for causing the CPU 201 to carry out the use restricting process shown in FIG. 10. In this embodiment, the using time of the modem 1 is restricted as a hardware function.

As shown in FIG. 10, when the use of the modem 1 is started, the modem 1 generates the hardware interrupt 9 with respect to the BIOS 4. The BIOS 4 reads a use starting time of the modem 1 from the RTC 3 in response to the hardware interrupt 9, and temporarily stores the use starting time in a storage means such as the CMOS 2. The BIOS 4 further reads the accumulated used time of the modem 1 from the region 8 of the CMOS 2, and reads the upper limit of accumulated used time per month of the modem 1 from the region 6 of the CMOS 2.

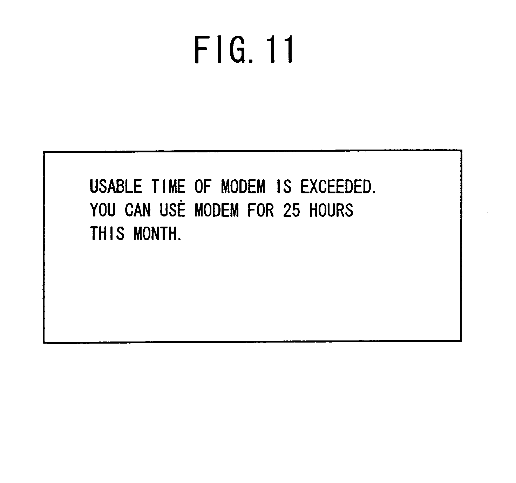

Next, the BIOS 4 decides whether or not the accumulated used time of the modem 1 exceeds the upper limit of accumulated used time per month of the modem 1, that is, whether or not the modem 1 is usable. If the accumulated used time of the modem 1 does not exceed the upper limit of accumulated used time per month of the modem 1, the interrupt process ends as is. On the other hand, if the accumulated used time of the modem 1 exceeds the upper limit of accumulated used time of the modem 1, a display of a warning message shown in FIG. 11, for example, is displayed on the display 102, and the interrupt process ends after setting the modem 1 to a non-usable state. For example, the modem 1 can be set to the non-usable state by stopping the supply of power to the modem 1.

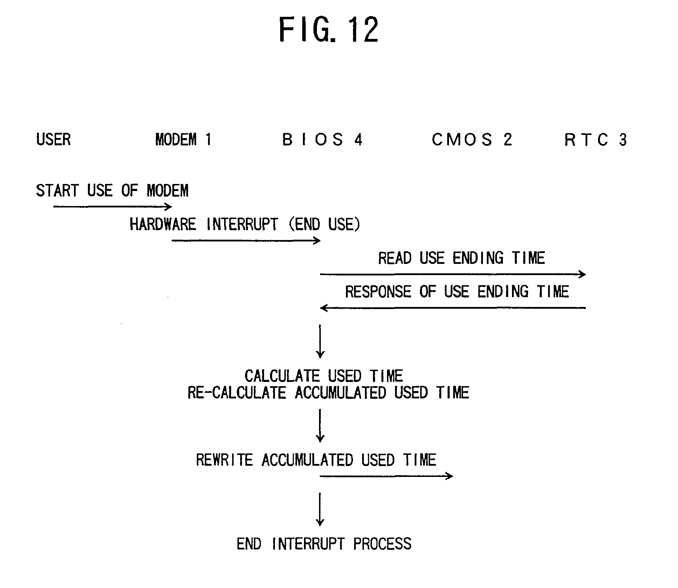

FIG. 12 is a time chart for explaining a use restricting process of the CPU 201 when ending the use of the modem 1 in the first embodiment. The first embodiment of the storage medium according to the present invention is formed by a recording medium such as the disk 110, which stores a program for causing the CPU 201 to carry out the use restricting process shown in FIG. 12.

As shown in FIG. 12, when the use of the modem 1 ends, the modem 1 again generates a hardware interrupt 9 with respect to the BIOS 4. The BIOS 4 reads a use ending time from the RTC 3 in response to the hardware interrupt 9. At this point in time, the BIOS 4 calculates the used time of the modem 1 from the use starting time which is previously read and stored and the use ending time which is presently read. In addition, the BIOS 4 recalculates the accumulated used time of the modem 1 based on the calculated used time of the modem 1. Moreover, the BIOS 4 rewrites the accumulated used time of the modem 1 stored in the region 8 of the CMOS 2 to the recalculated accumulated used time, and ends the interrupt process.

At timings other than the timing when the use of the modem 1 ends, the accumulated used time is recalculated for every one minute, for example, and the accumulated used time of the modem 1 stored in the region 8 of the CMOS 2 is rewritten to the recalculated accumulated used time. In this state, the present time is read from the RTC 3, and the use starting time is rewritten to the present time. In addition, if the accumulated used time of the modem 1 exceeds the upper limit of the accumulated used time per month of the modem 1, the warning message shown in FIG. 11, for example, is displayed on the display 102, and the modem 1 is set to the non-usable state.

The accumulated used time of the modem 1 and the used month in which the time accumulation is made are stored in the region 8 of the CMOS 2, but the stored accumulated used time and used month of the modem 1 are automatically initialized when the month changes. The BIOS 4 reads the used month from the region 8 of the CMOS 2 when starting the computer system 100, and reads the present month from the RTC 3. If the present month is newer than the used month, the BIOS 4 sets the accumulated used time stored in the region 8 to zero, and sets the used month stored in the region 8 to the present month.

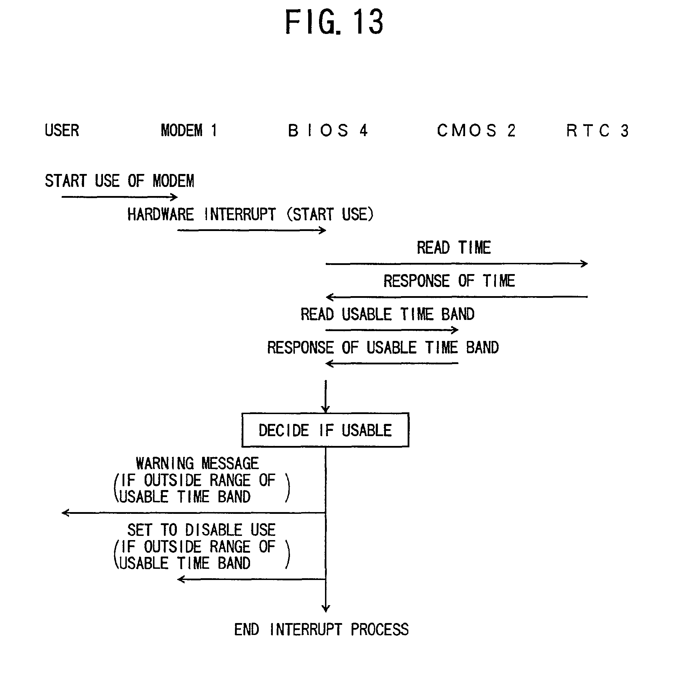

FIG. 13 is a time chart for explaining a use restricting process of the CPU 201 depending on a time band of the modem 1 in the first embodiment. The first embodiment of the storage medium according to the present invention is formed by a recording medium such as the disk 110, which stores a program for causing the CPU 201 to carry out the use restricting process shown in FIG. 13.

The user uses the setting program of the BIOS 4 to set a usable time band of the modem 1 in advance. The usable time band of the modem 1 can be set similarly to the setting of the usable accumulation time of the modem 1 described above in conjunction with FIGS. 4 through 9. More particularly, the usable time band of the modem 1 is written in the region 7 of the CMOS 2 or, the usable time band of the modem 1 stored in the region 7 is rewritten.

In FIG. 13, when the use of the modem 1 starts, the modem 1 generates a hardware interrupt 9 with respect to the BIOS 4. The BIOS 4 reads the present time from the RTC 3 in response to the hardware interrupt 9. The BIOS 4 further reads the usable time band of the modem 1 from the region 7 of the CMOS 2.

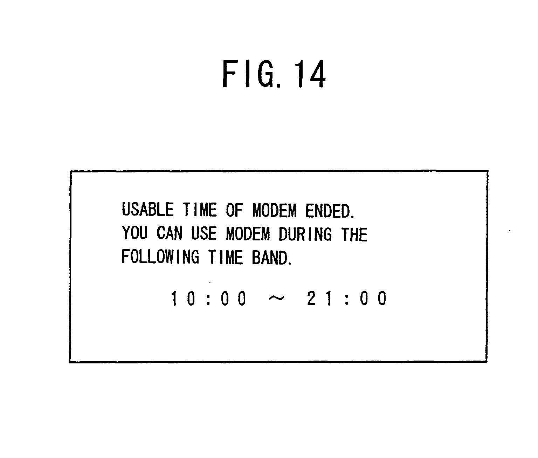

Next, the BIOS 4 decides whether or not the present time is within a range of the usable time band of the modem 1. If the present time is within the range of the usable time band of the modem 1, the interrupt process ends as is. On the other hand, if the present time is outside the range of the usable time band of the modem 1, a warning message shown in FIG. 14, for example, is displayed on the display 102, and the interrupt process ends after setting the modem 1 to the non-usable state.

At timings other than the timing when the use of the modem 1 starts, the present time is read from the RTC 3 for every one minute, for example, and if the present time is outside the range of the usable time band of the modem 1, the warning message shown in FIG. 14, for example, is displayed on the display 102, and the modem 1 is set to the non-usable state.

When a timing at which the warning messages such as those shown in FIGS. 11 and 14 are displayed is set several minutes before the modem 1 actually becomes non-usable, for example, it is possible to prevent an inconvenience where the modem 1 suddenly becomes non-usable during use. In addition, the warning message may be output by means other than the display, such as by a voice message. By restricting the using time of the modem 1 in the manner described above, it is possible to restrict a communication time of the computer system 100, that is, an amount of communication of the computer system 100.

Furthermore, by only making the display and/or audio output of the warning message and not forcibly setting the modem 1 to the non-usable state, the user who receives the warning message can judge on his own whether or not the use of the modem 1 should be continued.

Next, a description will be given of a second embodiment of the information processing apparatus according to the present invention. In this second embodiment, the present invention is also applied to the computer system 100 shown in FIGS. 1 and 2.

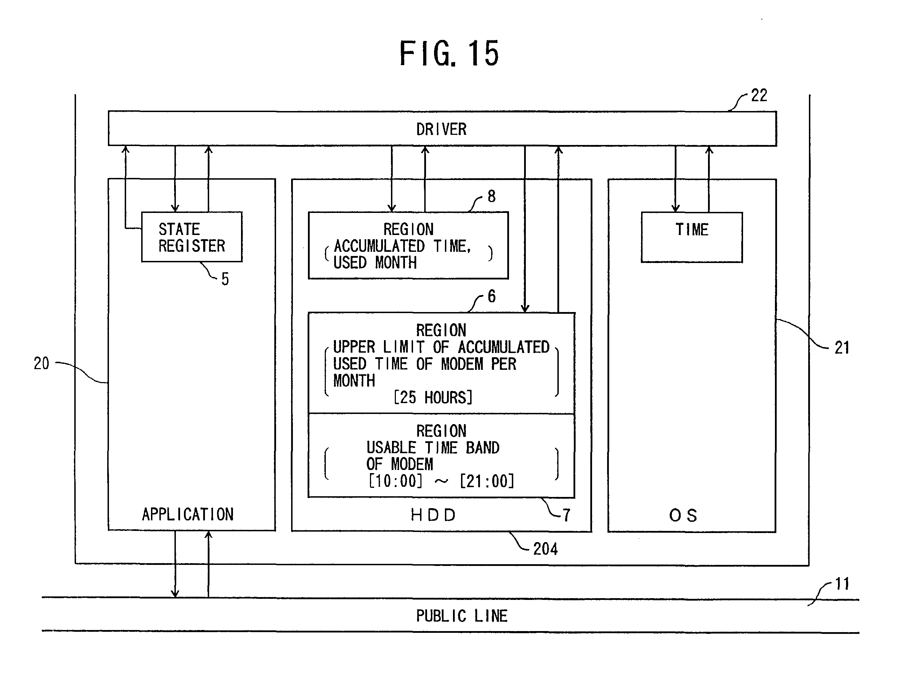

FIG. 15 is a system block diagram showing portions of a hardware function and a software function of the computer system 100 in this second embodiment of the information processing apparatus. In FIG. 15, those parts which are the same as those corresponding parts in FIGS. 1 through 3 are designated by the same reference numerals, and a description thereof will be omitted.

In FIG. 15, an application (program) 20 is provided in place of the modem 1, and the hard disk drive (HDD) 204 is provided in place of the CMOS 2. In addition, an OS 21 and a software driver 22 which are respectively realized by the CPU 201 are provided in place of the RTC 3 and the BIOS 4.

A register 5 for indicating used and stopped states of the application 20 is provided within the application 20. Hence, the software driver 22 can know the state of the application 20 by reading a value of the register 5. When the state indicated by the value of the register 5 changes, the application 20 generates a hardware interrupt 9. The HDD 204 includes regions 6 and 7 which may be set by the user by a setting program of the software driver 22. For example, the region 6 stores an upper limit of accumulated used time per month of the application 20, and the region 7 stores a usable time band of the application 20. Furthermore, the HDD 204 includes a region 8 for storing an accumulated used time of the application 20 by the user and a used month in which the time accumulation is made. The OS 21 holds a present time, and the software driver 22 can read the present time held by the OS 21.

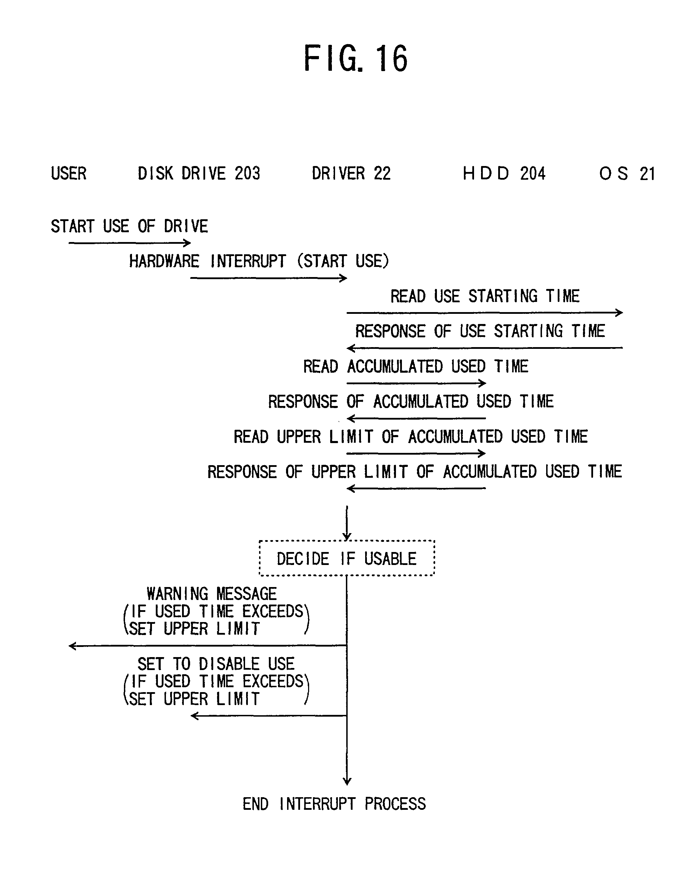

FIG. 16 is a time chart for explaining a use restricting process of the CPU 201 when starting use of the application 20 in the second embodiment. A second embodiment of the storage medium according to the present invention is formed by a recording medium such as the disk 110, which stores a program for causing the CPU 201 to carry out the use restricting process shown in FIG. 16. In this embodiment, the using time of the application 20 is restricted as a software function. For example, the application 20 is an application of a game.

As shown in FIG. 16, when the use of the application 20 starts, the application 20 generates the hardware interrupt 9 with respect to the software driver 22. The software driver 22 reads a use starting time of the application 20 from the OS 21 in response to the hardware interrupt 9, and temporarily stores the use starting time in a storage means such as the HDD 204. The software driver 22 further reads the accumulated used time of the application 20 from the region 8 of the HDD 204, and reads the upper limit of accumulated used time per month of the application 20 of the HDD 204.

Next, the software driver 22 decides whether or not the accumulated used time of the application 20 exceeds the upper limit of accumulated used time per month of the application 20, that is, whether or not the application 20 is usable. If the accumulated used time of the application 20 does not exceed the upper limit of accumulated used time per month of the application 20, the interrupt process ends as is. On the other hand, if the accumulated used time of the application 20 exceeds the upper limit of accumulated used time of the application 20, a display of a warning message similar to that shown in FIG. 11, for example, is displayed on the display 102, and the interrupt process ends after setting the application 20 to a non-usable state. For example, the application 20 can be set to the non-usable state by not displaying a selection button for the application 20.

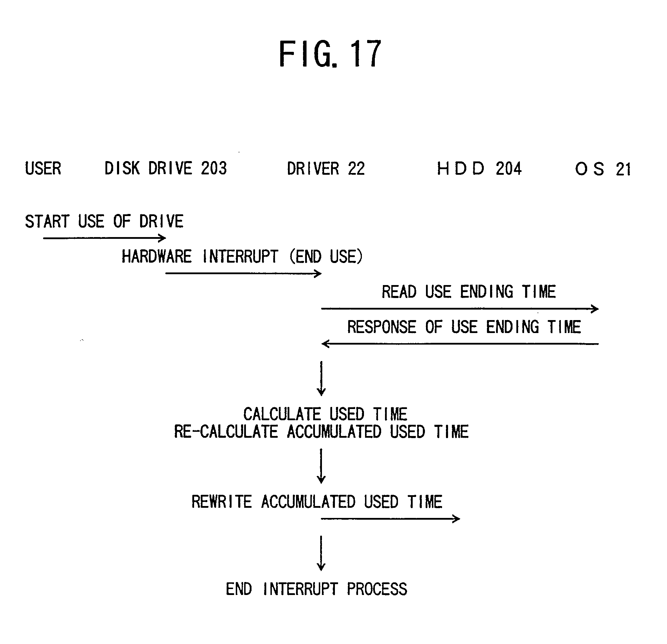

FIG. 17 is a time chart for explaining a use restricting process of the CPU 201 when ending the use of the application 20 in the second embodiment. The second embodiment of the storage medium according to the present invention is formed by a recording medium such as the disk 110, which stores a program for causing the CPU 201 to carry out the use restricting process shown in FIG. 17.

As shown in FIG. 17, when the use of the application 20 ends, the application 20 again generates a hardware interrupt 9 with respect to the software driver 22. The software driver 22 reads a use ending time from the OS 21 in response to the hardware interrupt 9. At this point in time, the software driver 22 calculates the used time of the application 20 from the use starting time which is previously read and stored and the use ending time which is presently read. In addition, the software driver 22 recalculates the accumulated used time of the application 20 based on the calculated used time of the application 20. Moreover, the software driver 22 rewrites the accumulated used time of the application 20 stored in the region 8 of the HDD 204 to the recalculated accumulated used time, and ends the interrupt process.

At timings other than the timing when the use of the application 20 ends, the accumulated used time is recalculated for every one minute, for example, and the accumulated used time of the application 20 stored in the region 8 of the HDD 204 is rewritten to the recalculated accumulated used time. In this state, the present time is read from the OS 21, and the use starting time is rewritten to the present time. In addition, if the accumulated used time of the application 20 exceeds the upper limit of the accumulated used time per month of the application 20, the warning message similar to that shown in FIG. 11, for example, is displayed on the display 102, and the application 20 is set to the non-usable state.

The accumulated used time of the application 20 and the used month in which the time accumulation is made are stored in the region 8 of the HDD 204, but the stored accumulated used time and used month of the application 20 are automatically initialized when the month changes. The software driver 22 reads the used month from the region 8 of the HDD 204 when starting the computer system 100, and reads the present month from the OS 21. If the present month is newer than the used month, the software driver 22 sets the accumulated used time stored in the region 8 to zero, and sets the used month stored in the region 8 to the present month.

A use restricting process of the CPU 201 depending on a time band of the application 20 in the second embodiment can be carried out similarly as in the case of the first embodiment described above in conjunction with FIG. 13, and a description thereof will be omitted.

Of course, it is possible to restrict both the using time of the hardware function as in the first embodiment and the using time of the software function as in the second embodiment.

Next, a description will be given of a third embodiment of the information processing apparatus according to the present invention. In this third embodiment, the present invention is applied to a server-client system having a server and a plurality of clients.

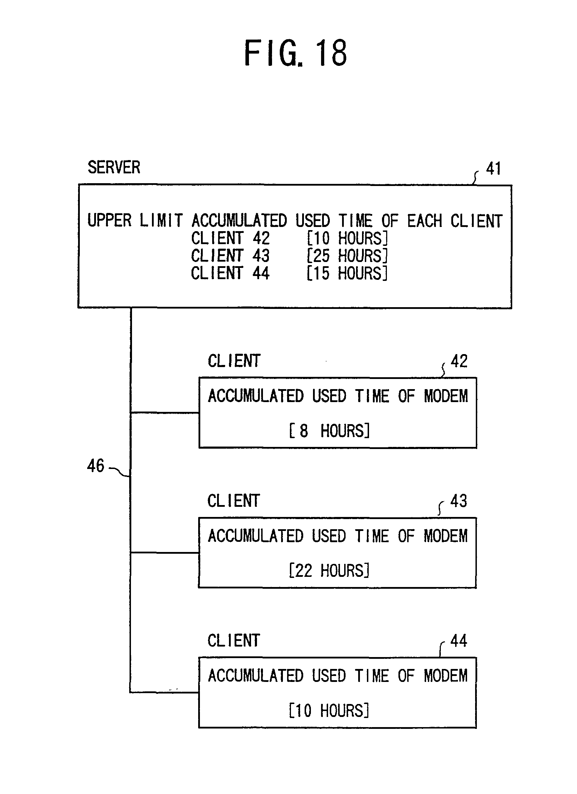

FIG. 18 is a system block diagram showing a server-client system applied with this third embodiment of the information processing apparatus. In FIG. 8, a server 41 is connected to a plurality of clients 42 through 44 via a network 46 such as a LAN. The server 41 and the clients 42 through 44 respectively have a basic structure similar to that of the computer system 100 described above. The server 41 centrally manages upper limits of accumulated used times of modems of each of the clients 42 through 44. In addition, each of the clients 42 through 44 manages an accumulated used time of the modem thereof.

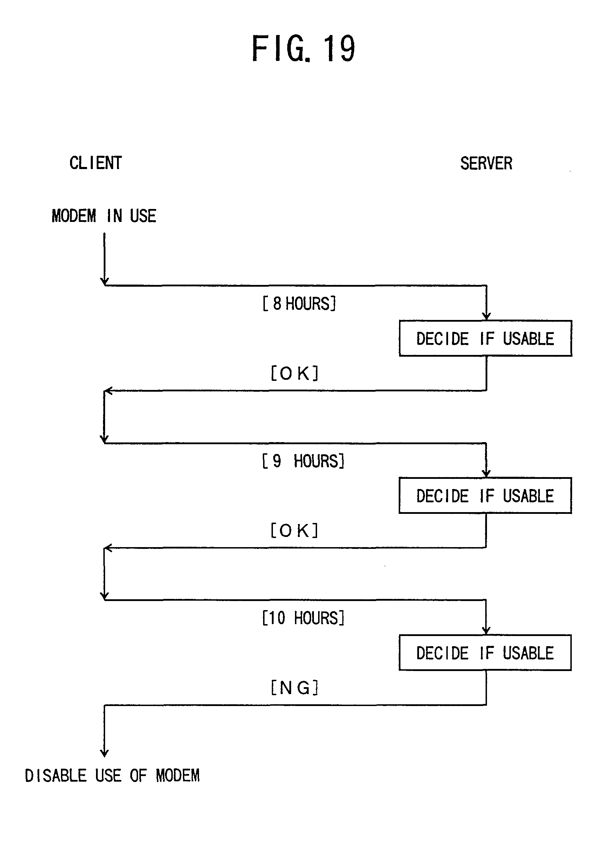

FIG. 19 is a time chart for explaining the operation of this third embodiment. For the sake of convenience, FIG. 19 shows exchanges between the server 41 and the client 42.

In each of the clients 42 through 44, a software driver similar to the software driver 22 shown in FIG. 15 transmits a packet with respect to the server 41 for every predetermined time while the modem thereof is used. This packet includes information related to the accumulated used time of the modem at the client which is provided with the software driver.

In the case shown in FIG. 19, the server 41 which receives the packet transmitted from the client 42 decides whether or not the modem of the client 42 is usable, by comparing the upper limit of the accumulated used time of the modem of the client 42 managed within the server 41 and the accumulated used time within the received packet. For example, if the accumulated used time of the modem of the client 42 is 8 hours and the upper limit of the accumulated used time of the modem of the client 42 managed within the server 41 is 10 hours, a first decision result in FIG. 19 becomes YES, and the server 41 transmits to the client 42 a packet which includes information OK permitting continued use of the modem of the client 42. In FIG. 19, a third decision result becomes NO, and in this case, the server 10 transmits to the client 42 a packet which includes information NG prohibiting continued use of the modem of the client 42. Such an exchange between the server 41 and the client 42, is similarly made between the server 41 and each of the other clients 43 and 44.

Therefore, the process carried out in this third embodiment is similar to those of the first and second embodiments described above, except that the use of the hardware function and/or the software function of each computer system is restricted not within each computer system but by another computer system.

According to this third embodiment, the use of the hardware function and/or the software function in each of the clients can be restricted by the server, by independently controlling each of the clients from the server.

In each of the embodiments described above, a sum total of the usable time of the specific hardware function and/or the software function is restricted. However, it is of course possible to restrict the usable time band and/or the sum total of the usable time of the specific hardware function and/or the software function for each of a plurality of users.

Next, a description will be given of a fourth embodiment of the information processing apparatus according to the present invention. In this embodiment, the present invention is applied to the computer system 100 shown in FIGS. 1 and 2.

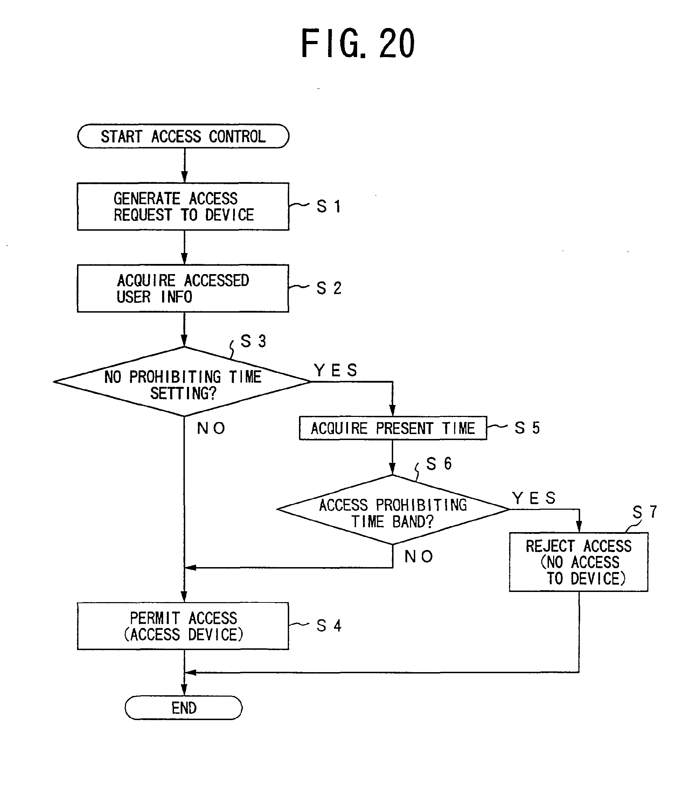

FIG. 20 is a flow chart for explaining an access control process of the CPU 201 of the computer system 100 in this fourth embodiment of the information processing apparatus. In FIG. 20, a step S1 generates an access request to a device in response to an operation of the keyboard 103 and/or the mouse 104 (hereinafter simply referred to as the keyboard 103 or the like) made by the user. The "device" refers to the hardware function such as the modem 1 and the disk drive 203 or, the software function such as the application. A step S2 acquires user information related to the user who generated the access request, from a user information table which is stored in the memory part 202, for example. The user information can be acquired by referring to the user information table based on a user identification number, password and the like input by the user, for example.

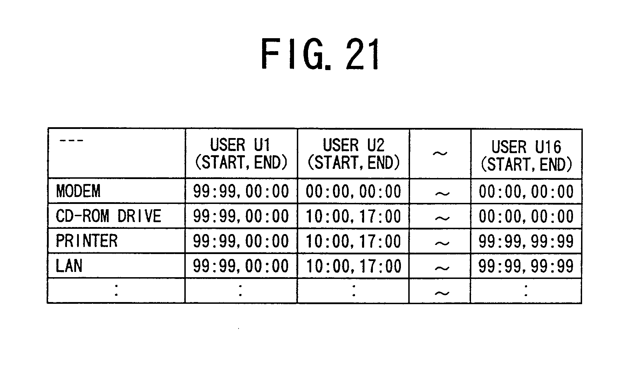

FIG. 21 is a diagram showing an embodiment of the user information table. In FIG. 21, the user information of each user is stored with respect to each device. For the sake of convenience, FIG. 21 shows a case where the user information table includes user information related to users U1 through U16, with respect to each of devices which include a modem, a CD-ROM drive, a printer and a LAN. Of course, the number of users and the number of devices in the user information table are not limited to those shown in FIG. 21. In addition, the devices are not limited to the hardware functions shown in FIG. 21, and the devices may be software functions.

In FIG. 21, a case where the starting time and the ending time of the user information are the same, indicates that the access is prohibited continuously for 24 hours. When the starting time of the user information is 99:99, a case where the ending time is 00:00 indicates that there is no access prohibiting time, a case where the ending time is 00:01 to 99:98 is not permitted, and a case where the ending time is 99:99 indicates that the access is prohibited continuously for 24 hours. Accordingly, since the user information of the user U1 with respect to the printer has the starting time 99:99 and the ending time 00:00, it is indicated that there is no access prohibit time. In addition, the user information of the user U2 with respect to the modem has the starting time 00:00 and the ending time 00:00, and indicates that the access is prohibited continuously for 24 hours. Furthermore, the user information of the user U2 with respect to the CD-ROM drive has the starting time 10:00 and the ending time 17:00, and indicates that the access is permitted in a time band of 10:00 to 17:00.

A step S3 decides whether or not the user information acquired from the user information table includes no prohibiting time setting. If the user information includes no prohibiting time setting and the decision result in the step S3 is NO, a step S4 permits the access to the device to which the access request exists, and the process ends.

On the other hand, if the decision result in the step S3 is YES, a step S5 acquires the present time. A step S6 decides whether or not the present time is within an access prohibit time band set in the acquired user information. The process advances to the step S4 if the decision result in the step S6 is NO. If the decision result in the step S6 is YES, a step S7 rejects, that is, prohibits the access to the device to which the access request exists, and the process ends.

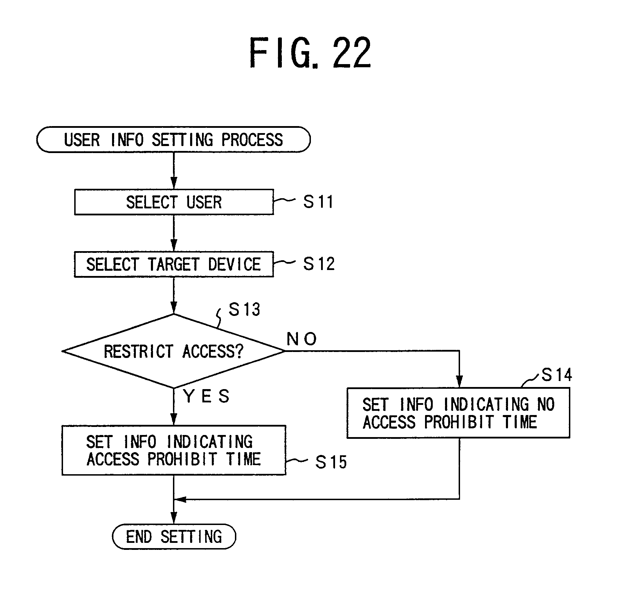

FIG. 22 is a flow chart for explaining a user information table setting process of the CPU 201 in this fourth embodiment. In FIG. 22, a step S11 selects the user by operating the keyboard 103 or the like. When setting the user information table shown in FIG. 21, one of the users U1 through U16 is selected. A step S12 selects a target device by operating the keyboard 103 or the like. A step S13 decides whether or not to restrict the access to the target device in response to the operation of the keyboard 103 or the like. If the decision result in the step S13 is NO, a step S14 sets information indicating that there is no access prohibit time, that is, a starting time 99:99 and an ending time 00:00, for example, to the user information table, based on an input from the keyboard 103 or the like, and the process ends. On the other hand, if the decision result in the step S13 is YES, a step S15 sets information related to the access prohibit time, that is, an access prohibit time band, to the user information table, based on an input from the keyboard 103 or the like, and the process ends.

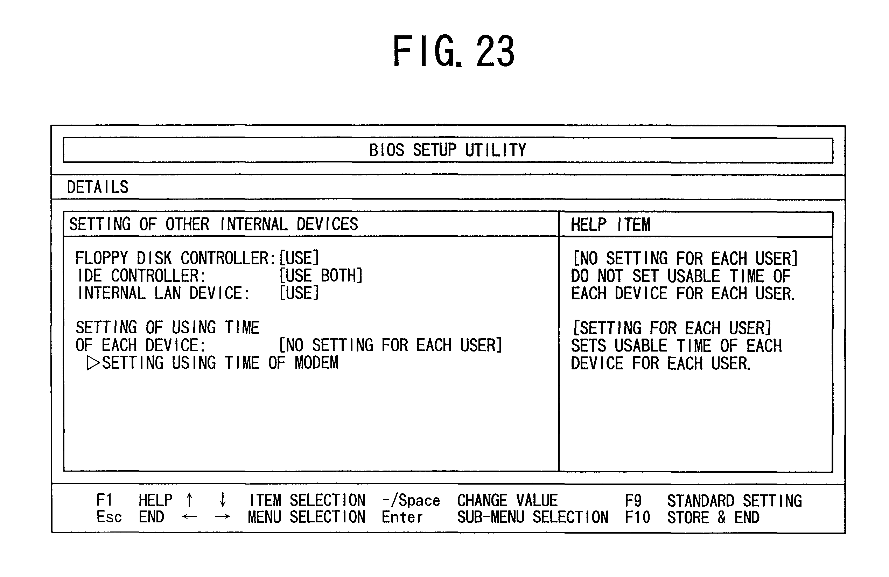

FIG. 23 is a diagram showing a display which is made on the display 102 by selecting "setting of other internal devices" as in FIG. 6. When the user selects "no setting for each user" in this state by operating the mouse 104, for example, the operation of one of the first through third embodiments is carried out. On the other hand, when the user selects "set for each user" in this state by operating the mouse 104, for example, the operation advances to the user information table setting process shown in FIG. 22.

Next, a description will be given of a fifth embodiment of the information processing apparatus according to the present invention. In this embodiment, the present invention is applied to the computer system 100 shown in FIGS. 1 and 2.

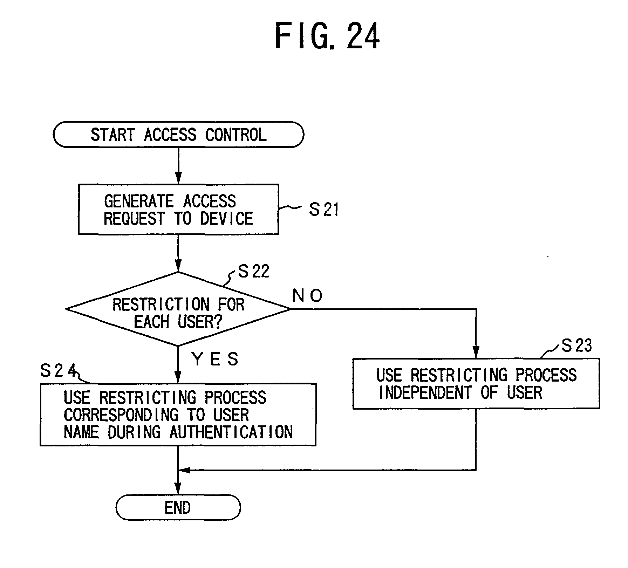

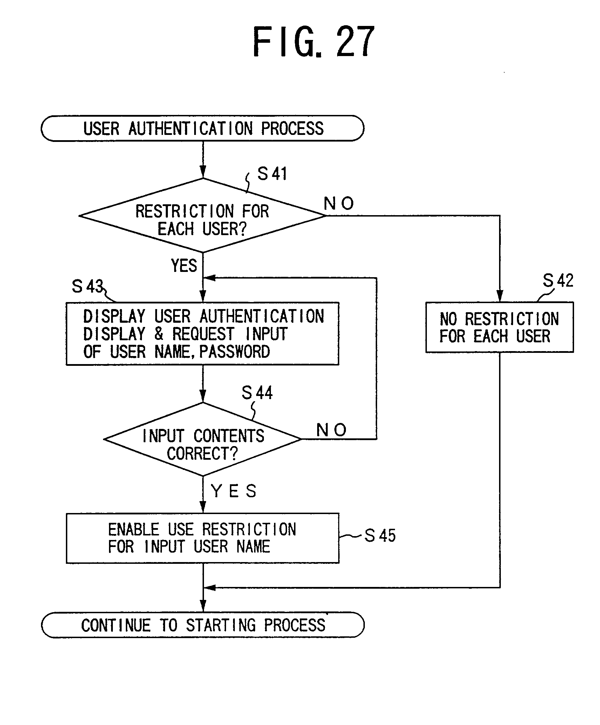

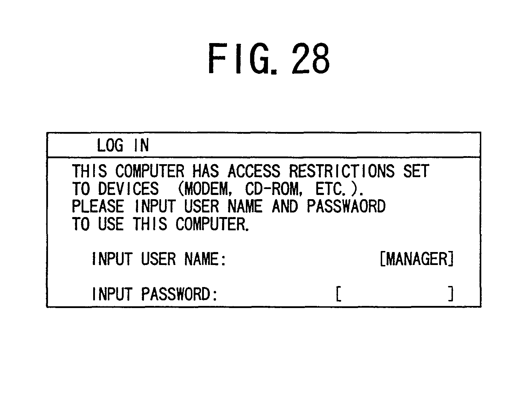

FIG. 24 is a flow chart for explaining an access control process of the CPU 201 of the computer system 100 in this fifth embodiment of the information processing apparatus. In FIG. 24, a step S21 generates an access request to the device in response to the operation of the keyboard 103 or the like made by the user. The device in this case may be the hardware function such as the modem 1 and the disk drive 203 or, the software function such as the application. A step S22 decides whether or not restrictions exist for each user with respect to the device to which the access request is made, using the user information table used in the fourth embodiment described above, for example. If the decision result in the step S22 is NO, a step S23 carries out a use restricting process which is not dependent on the user, with respect to the device, that is, the process of one of the first through third embodiments described above is carried out, for example, and the process ends. On the other hand, if the decision result in the step S22 is YES, a step S24 carries out a user restricting process in correspondence with each user name which is used during a user authentication process, with respect to the device, and the process ends. The user authentication process will be described later in conjunction with FIGS. 27 and 28.

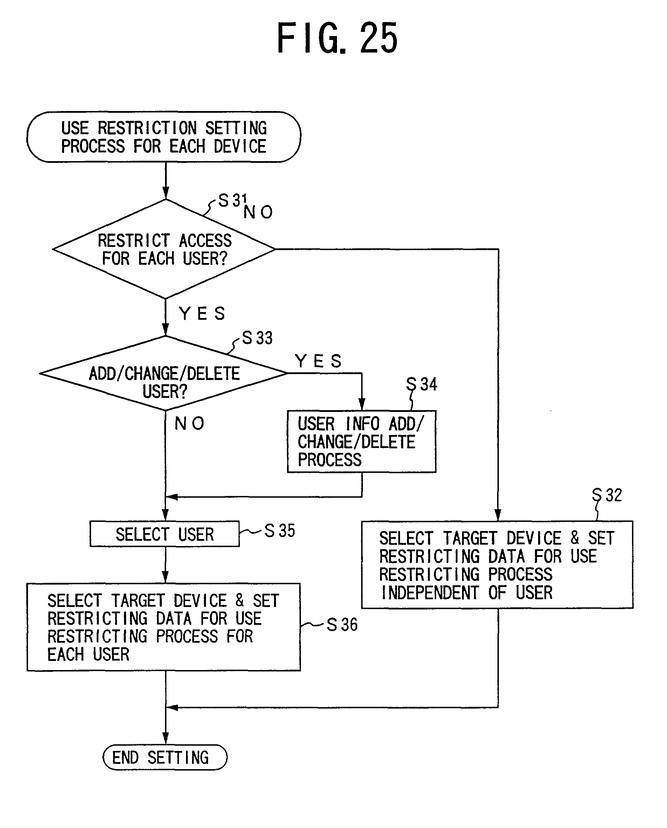

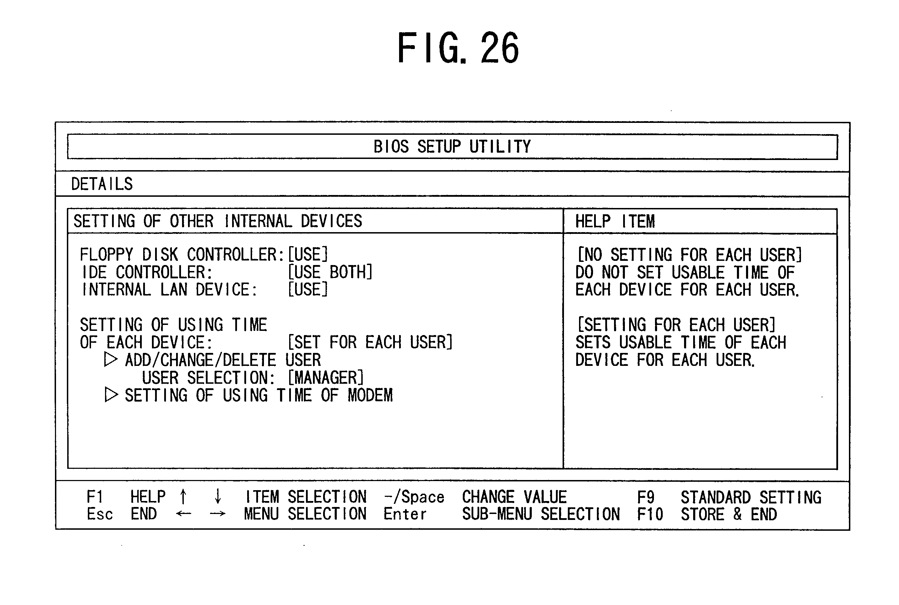

FIG. 25 is a flow chart for explaining a user information table setting process of the CPU 201, that is, a use restriction setting process for each device, in this fifth embodiment. In FIG. 25, a step S31 decides whether or not the access is to be restricted for each user. FIG. 26 is a diagram showing a display which is made on the display 102 by selecting "setting of other internal devices" as in FIG. 6. When the user selects "no setting for each user" in this state by operating the mouse 104, for example, the decision result in the step S31 becomes NO, and a step S32 carries out the operation of one of the first through third embodiments described above. In other words, the step S32 selects the target device based on the input from the keyboard 103 or the like, sets restricting data for carrying out the use restricting process which is not dependent on the user, and the process ends. On the other hand, if the user selects "set for each user" in this state by operating the mouse 104, for example, the decision result in the step S31 becomes YES, and the process advances to a step S33.

The step S33 decides whether or not addition, change or deletion of the user exists, based on an input made from the keyboard 103 or the like with respect to a display shown in FIG. 26 which is made on the display 102. If the decision result in the step S33 is YES, a step S34 carries out a process of adding, changing or deleting the user information, based on an input made from the keyboard 103 or the like, and the process advances to a step S35. On the other hand, if the decision result in the step S33 is NO, the process advances to the step S35. The step S35 selects the user based on an input made from the keyboard 103 or the like. In addition, a step S36 selects the target device based on an input made from the keyboard 103 or the like, sets the restricting data for the use restricting process for each user, and the process ends.

FIG. 27 is a flow chart for explaining the user authentication process of the CPU 201 of this fifth embodiment. The user authentication process shown in FIG. 27 is carried out when carrying out a starting process of the computer system 100.

In FIG. 27, a step S41 refers to the user information table such as that described above, and decides whether or not the use restriction exists for each user. If the decision result in the step S41 is NO, a step S42 determines that there is no use restriction for each user, and the process ends to return to and continue the starting process. On the other hand, if the decision result in the step S41 is YES, a step S43 displays a user authentication display shown in FIG. 28 on the display 102, to urge the user to input the user name and the password. A step S44 decides whether or not the user name and the password which are input from the keyboard 103 or the like are correct. The process returns to the step S43 if the decision result in the step S44 is NO. On the other hand, if the decision result in the step S44 is YES, a step S45 enables the use restrictions which are set with respect to the device for the input user name, that is, enables the device access restriction, and the process ends to return to and continue the starting process.

Further, the present invention is not limited to these embodiments, but various variations and modifications may be made without departing from the scope of the present invention.

## Claims

1. An information processing apparatus characterized by:
setting means for setting a sum total of a usable time of at least one specific function under a predetermined condition; and
restricting means for restricting use of the specific function if a used time of the specific function exceeds the sum total of usable time of the specific function.

2. The information processing apparatus as claimed in claim 1, characterized in that the sum total is independently set for a plurality of time bands, and said restricting means restricts the use of the specific function if a used time of the specific function within an arbitrary time band exceeds a sum total of usable time corresponding to the arbitrary time band.

3. The information processing apparatus as claimed in claim 1 or 2, characterized in that setting of the sum total by said setting means and restricting use of the specific function by said restricting means are independently carried out with respect to a plurality of computer systems.

4. An information processing apparatus characterized by:
setting means for setting a usable time band of at least one specific function under a predetermined condition, with respect to each of a plurality of users; and
restricting means for restricting use of the specific function by a predetermined user during a time band other than a usable time band which is set with respect to the predetermined user.

5. The information processing apparatus as claimed in any of claims 1 to 4, characterized in that the specific function is a hardware function and/or a software function.

6. The information processing apparatus as claimed in claim 5, wherein the hardware function is a modem function.

7. A computer-readable storage medium which stores a program for causing a computer to restrict a usable time of a function of the computer, said program characterized by:
a setting procedure causing the computer to set a sum total of a usable time of at least one specific function under a predetermined condition; and
a restricting procedure causing the computer to restrict use of the specific function if a used time of the specific function exceeds the sum total of usable time of the specific function.

8. The computer-readable storage medium as claimed in claim 7, characterized in that the sum total is independently set for a plurality of time bands, and said restricting procedure causes the computer to restrict the use of the specific function if a used time of the specific function within an arbitrary time band exceeds a sum total of usable time corresponding to the arbitrary time band.

9. A computer-readable storage medium which stores a program for causing a computer to restrict a usable time of a function of the computer, said program characterized by:
a setting procedure causing the computer to set a usable time band of at least one specific function under a predetermined condition, with respect to each of a plurality of users; and
a restricting procedure causing the computer to restrict use of the specific function by a predetermined user during a time band other than a usable time band which is set with respect to the predetermined user.

10. The computer-readable storage medium as claimed in any of claims 7 to 9, characterized in that the specific function is a hardware function and/or a software function.
